# EUROPEAN PATENT APPLICATION

(11) **EP 4 600 721 A1**
(43) Date of publication of application: **13.08.2025**
(21) Application number: 25157204.6
(22) Date of filing: 11.02.2025
(51) Int. Cl.: G02F 1/11, G02F 1/03

(54) **ACTIVE INTERFERENCE REDUCTION IN POCKELS CELLS**

(30) Priority: 12.02.2024 US 202463552506 P; 06.02.2025 US 202519046896
(71) Applicant: II-VI Delaware, Inc., Wilmington, DE 19890 (US)
(72) Inventor: BRANIGAN, Kyle, Wilmington, 19890 (US); ARGONDIZZO, Adam, Wilmington, 19890 (US); GENTNER, Harrison, Wilmington, 19890 (US); DAVIS, Ryan, Wilmington, 19890 (US)
(74) Representative: Schmidt, Christian

(57) **Abstract**

This disclosure describes a system and method for providing an additional piezoelectric component that generates acoustic compensation of an electro-optic modulator (EOM) for use in the Long-Wave Infrared (LWIR) and Mid-Wave Infrared (MWIR) spectrum.

## Description

### CROSS REFERENCE TO RELATED APPLICATIONS

This application claims priority to and the benefit of U.S. Provisional Patent Application No. 63/552,506 entitled "ACTIVE ACOUSTIC COMPENSATION OF EOM FOR USE IN LWIR AND MWIR SPECTRUM" filed February 12, 2024, which is hereby incorporated herein by reference in its entirety.

### BACKGROUND

Limitations and disadvantages of a traditional electro-optic modulator (EOM) will become apparent to one of skill in the art, through comparison of such approaches with some aspects of the present method and system set forth in the remainder of this disclosure with reference to the drawings.

### BRIEF SUMMARY

Systems and methods provide an additional piezoelectric components that generates acoustic compensation of an electro-optic modulator (EOM) for use in Long-Wave Infrared (LWIR) and Mid-Wave Infrared (MWIR) spectrum, substantially as illustrated by and/or described in connection with at least one of the figures, as set forth more completely in the claims.

### BRIEF DESCRIPTION OF THE DRAWINGS

FIG. 1 illustrates an example EOM without an additional piezoelectric component, in accordance with various example implementations of this disclosure.
FIG. 2 illustrates a first example EOM system with an additional piezoelectric component for active compensation of acoustic interference generated by a Pockels cell, in accordance with various example implementations of this disclosure.
FIG. 3 illustrates a second example EOM system with an additional piezoelectric component for active compensation of acoustic interference generated by a Pockels cell, in accordance with various example implementations of this disclosure.
FIG. 4 illustrates a third example EOM system with an additional piezoelectric component for active compensation of acoustic interference generated by a Pockels cell, in accordance with various example implementations of this disclosure.
FIG. 5 illustrates a fourth example EOM system with an additional piezoelectric component for active compensation of acoustic interference generated by a Pockels cell, in accordance with various example implementations of this disclosure.

### DETAILED DESCRIPTION

The following discussion provides various examples of systems and methods for producing piezoelectric components for active compensation. Such examples are non-limiting, and the scope of the appended claims should not be limited to the particular examples disclosed. In the following discussion, the terms "example" and "e.g." are non-limiting.

The figures illustrate the general manner of construction, and descriptions and details of well-known features and techniques may be omitted to avoid unnecessarily obscuring the present disclosure. In addition, elements in the drawing figures are not necessarily drawn to scale. For example, the dimensions of some of the elements in the figures may be exaggerated relative to other elements to help improve understanding of the examples discussed in the present disclosure. The same reference numerals in different figures denote the same elements.

The term "or" means any one or more of the items in the list joined by "or". As an example, "x or y" means any element of the three-element set {(x), (y), (x, y)}. As another example, "x, y, or z" means any element of the seven-element set {(x), (y), (z), (x, y), (x, z), (y, z), (x, y, z)}.

The terms "comprises," "comprising," "includes," and/or "including," are "open ended" terms and specify the presence of stated features, but do not preclude the presence or addition of one or more other features.

The terms "first," "second," etc. may be used herein to describe various elements, and these elements should not be limited by these terms. These terms are only used to distinguish one element from another. Thus, for example, a first element discussed in this disclosure could be termed a second element without departing from the teachings of the present disclosure.

Unless specified otherwise, the term "coupled" may be used to describe two elements directly contacting each other or describe two elements indirectly connected by one or more other elements. For example, if element A is coupled to element B, then element A can be directly contacting element B or indirectly connected to element B by an intervening element C. Similarly, the terms "over" or "on" may be used to describe two elements directly contacting each other or describe two elements indirectly connected by one or more other elements.

Light is a fundamental phenomenon with diverse properties and applications, spanning the electromagnetic spectrum from radio waves to gamma rays. While the human eye perceives only the visible spectrum, light extends beyond this range to comprise longer wavelengths, such as infrared, and shorter wavelengths, such as ultraviolet and x-rays. These variations in wavelength correspond to changes in energy and offer unique interactions with materials, enabling specialized technologies. For example, long-wave infrared (LWIR) light, characterized by its lower energy and longer wavelengths compared to visible light, plays a crucial role in fields such as imaging, industrial processing, and advanced optics.

A key attribute of light is its polarization-the orientation of its electric field in space. Polarization can manifest as linear, circular, or elliptical, depending on the interaction of the light wave with materials or filters. This property is particularly significant when working with coherent light sources like lasers, which propagate in a uniform direction and exhibit consistent wavelength and polarization. The ability to manipulate polarization may enable precise control over light for applications such as optical switching and modulation.

The electro-optic effect, specifically the Pockels effect, is central to the operation of electro-optic modulators (EOMs), which allow dynamic control of light polarization. This effect occurs in certain non-centrosymmetric crystals, where an applied electric field induces changes in the refractive index, altering the polarization state of transmitted light. Materials such as cadmium telluride (CdTe), gallium arsenide (GaAs), zinc selenide (ZnSe), zinc sulfide (ZnS), cadmium zinc telluride (CdZnTe or CZT), and boron arsenide (BAs) are among the few capable of supporting this effect in the LWIR and mid-wave infrared (MWIR) spectra due to their specific optical and structural properties.

Pockels cells, a primary component of EOMs, utilize these electro-optic materials to modulate light at high speeds without moving parts. By applying a voltage across the crystal, the birefringence of the material may be controlled, allowing phase modulation of laser beams with nanosecond precision. This capability is critical in advanced applications, such as extreme ultraviolet (EUV) lithography, where precise timing and modulation of light are essential for producing state-of-the-art microchips.

The present disclosure relates to electro-optic modulators (EOMs) and, more particularly, to methods and systems for reducing acoustic interference caused by piezoelectric effects within EOMs. Such interference can degrade modulation efficiency and impact system performance. This disclosure describes mechanisms to counteract these acoustic effects through the use of additional piezoelectric components for active compensation.

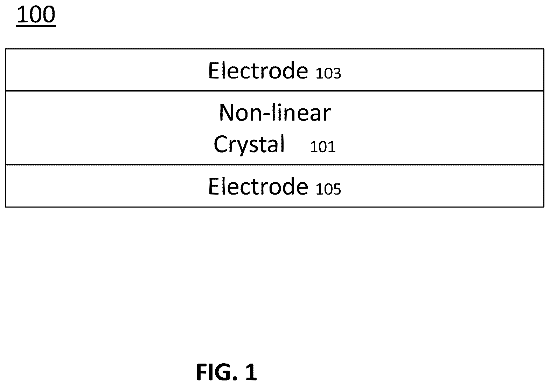

FIG. 1 illustrates an example EOM 100 without an additional piezoelectric component, in accordance with various example implementations of this disclosure. The fundamental principle of an EOM, such as the one illustrated in FIG. 1, relies on the variation of an electric field applied across an electro-optic crystal 101 via electrodes 103 and 105. The electro-optic crystal 101 may exhibit a birefringent effect on transmitted light when subjected to an electric field, enabling modulation. Materials exhibiting electro-optic effects may be characterized by a non-zero electro-optic coefficient in their electro-optic tensor. However, such materials inherently exhibit piezoelectric effects when placed in an electric field, generating undesirable acoustic waves.

These acoustic waves may induce stress in the crystal 101, leading to stress-induced birefringent effects that diminish modulation efficiency, particularly the extinction coefficient of the Pockels cell. The interaction between acoustic and electro-optic effects is responsible for a phenomenon referred to as "acoustic ringing," which impacts the performance and precision of the EOM.

This disclosure introduces systems and methods to mitigate acoustic interference in EOMs by employing additional piezoelectric components. These components are strategically oriented to counteract or dampen the acoustic waves generated by the electro-optic crystal. Active acoustic cancellation may be achieved through opposing acoustic or electrical waves, thereby reducing the adverse effects of acoustic ringing.

When a voltage is applied across the electro-optic crystal 101, it induces a piezoelectric response, causing the crystal to shrink in one direction and expand in another. This deformation generates acoustic waves, which propagate through the assembly and resonate at specific frequencies. These resonances, or "ringing," occur at characteristic frequencies (e.g., 41 kHz) and adversely affect modulation efficiency.

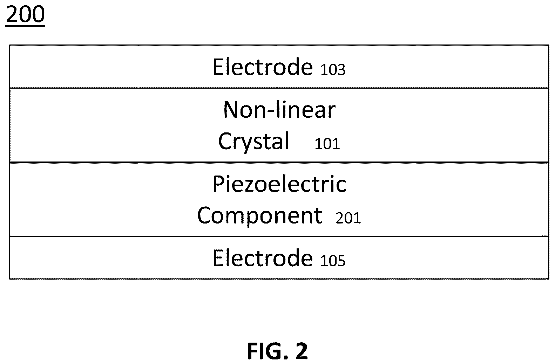

This disclosure may employ additional piezoelectric components (e.g., piezoelectric crystals, piezoelectric ceramics, and/or piezoelectric polymers) to counteract these acoustic effects. The system generates an opposing acoustic wave or a compensatory electrical wave that neutralizes the undesired effects. Implementations are illustrated in FIGs. 2-5.

FIG. 2 illustrates a first example EOM system 200 with an additional piezoelectric component 201 for active compensation of acoustic interference generated by a Pockels cell, in accordance with various example implementations of this disclosure.

In the single-piezoelectric component configuration of FIG. 2, a piezoelectric component 201 is placed between the electro-optic crystal 101 and one of the electrodes 105. This component 201 is configured to generate compensatory waves to counteract acoustic interference.

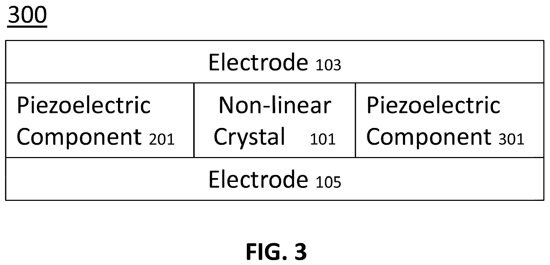

FIG. 3 illustrates a second example EOM system 300 with an additional piezoelectric component for active compensation of acoustic interference generated by a Pockels cell, in accordance with various example implementations of this disclosure.

In the dual-piezoelectric component configuration of FIG. 3, two piezoelectric components 201 and 301 are positioned on opposite sides of the electro-optic crystal 101, to enable symmetrical damping of acoustic waves.

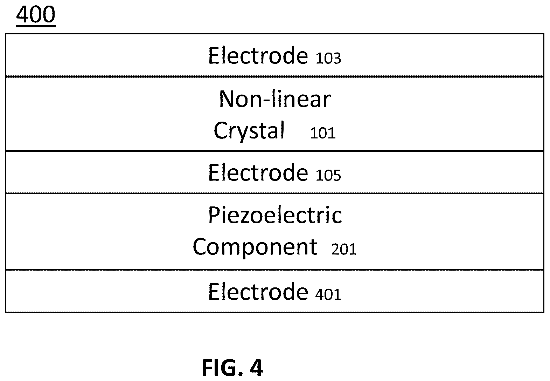

FIG. 4 illustrates a third example EOM system 400 with an additional piezoelectric component for active compensation of acoustic interference generated by a Pockels cell, in accordance with various example implementations of this disclosure.

In the stacked electrode configuration of FIG. 4, a piezoelectric component 201 is inserted between one of the electrodes 105 and an additional electrode 401, to enable a configuration optimized for acoustic damping.

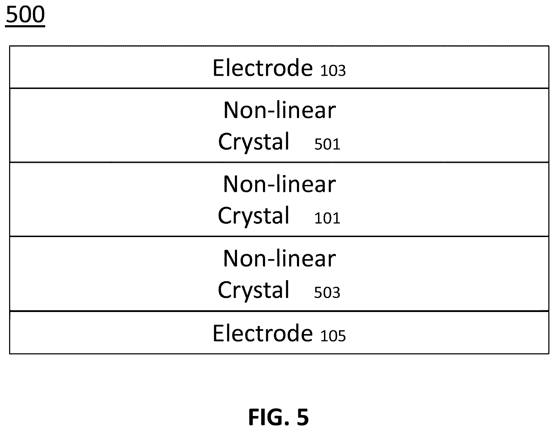

FIG. 5 illustrates a fourth example EOM system 500 with an additional piezoelectric component for active compensation of acoustic interference generated by a Pockels cell, in accordance with various example implementations of this disclosure.

In the enhanced damping configuration of FIG. 5, additional piezoelectric components 501 and 503 are fabricated from the same material as the electro-optic crystal 101, to enable a perfect acoustic matching. The crystallographic orientation of these components may differ to maximize damping effectiveness.

To achieve attenuation, the piezoelectric components may be powered and synchronized with the primary modulation system. In some implementations, the components may be driven by the same electric field used for the primary modulation, to enable synchronization. Alternatively, a separate control system may be employed to generate tailored compensation signals. The use of identical materials for the piezoelectric and electro-optic components may facilitate matching acoustic properties, further enhancing performance.

This disclosure allows for flexibility in material selection, provided the material exhibits piezoelectric effects and can be cut, oriented, and bonded appropriately. Gallium arsenide, for instance, is an ideal candidate due to its excellent electro-optic and piezoelectric properties. A gallium arsenide stack, where additional piezoelectric components are layered with the electro-optic crystal, may enable acoustic compatibility and optimal performance.

Compared to existing long-wave infrared EOMs, the disclosed systems and methods may offer significant advantages. The disclosed systems and methods may enhance modulation efficiency. For example, active damping may eliminate stress-induced birefringent effects, resulting in sharper turn-on and turn-off transitions.

Reduction of acoustic resonance may minimize wear on components, improving system longevity. The system's design accommodates higher power levels without degradation of performance. EOMs may involve an unknown voltage input that can be determined according to a phase shift.

This disclosure provides a solution to the challenges posed by acoustic interference in EOMs. By leveraging additional piezoelectric components and active acoustic cancellation techniques, the disclosed systems and methods may improve modulation efficiency, durability, and power handling, while ensuring clean and precise operation.

The system and method of this disclosure may provide automated tuning of the counteracting acoustic wave according to feedback from a stress sensor. Additionally, the system and method may comprise a delay circuit that is configured to time the counteracting acoustic wave.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. Therefore, it is intended that the present method and/or system not be limited to the particular implementations disclosed, but that the present method and/or system will include all implementations falling within the scope of the appended claims.

## Claims

1. A system comprising:
a non-linear electro-optic crystal;
a plurality of electrodes; and
a piezoelectric component operably coupled to the plurality of electrodes, wherein the piezoelectric component is configured to generate a counteracting acoustic wave to reduce interference related to the non-linear electro-optic crystal.

2. The system of claim 1, wherein the piezoelectric component comprises a same material as the non-linear electro-optic crystal.

3. The system of claim 1, wherein the system comprises two piezoelectric components that are located on opposite sides of the non-linear electro-optic crystal.

4. The system of claim 1, wherein the counteracting acoustic wave is configured to be adaptively tuned according to a desired damping.

5. The system of claim 1, wherein the piezoelectric component is aligned according to a crystallographic orientation of the non-linear electro-optic crystal.

6. The system of claim 1, wherein the plurality of electrodes are thermally isolated to prevent material degradation.

7. The system of claim 1, wherein tuning of the counteracting acoustic wave is automated via feedback from a stress sensor.

8. The system of claim 1, wherein the system comprises a delay circuit configured for timing the counteracting acoustic wave.

9. The system of claim 1, wherein the piezoelectric component is a multi-phase composite configured for damping.

10. The system of claim 1, wherein the plurality of electrodes are layered to improve waveform distribution.

11. A method, comprising:
positioning a piezoelectric component adjacent to an electro-optic crystal; and
modulating the piezoelectric component with a waveform.

12. The method of claim 11, wherein the piezoelectric component comprises a same material as the electro-optic crystal.

13. The method of claim 11, wherein the system comprises two piezoelectric components that are located on opposite sides of the electro-optic crystal.

14. The method of claim 11, wherein:
the waveform is a counteracting acoustic wave, and
the method comprises adaptively tuning the counteracting acoustic wave according to a desired damping.

15. The method of claim 11, wherein method comprises aligning the piezoelectric component according to a crystallographic orientation of the electro-optic crystal.

16. The method of claim 11, wherein:
the piezoelectric component is operably coupled to a plurality of electrodes, and
the plurality of electrodes are thermally isolated to prevent material degradation.

17. The method of claim 11, wherein:
the waveform is a counteracting acoustic wave, and
the method comprises adaptively tuning the counteracting acoustic wave according to feedback from a stress sensor.

18. The method of claim 11, wherein the method comprises timing the waveform via a delay circuit.

19. The method of claim 11, wherein the piezoelectric component is a multi-phase composite configured for damping.

20. The method of claim 11, wherein:
the piezoelectric component is operably coupled to a plurality of electrodes, and
the plurality of electrodes are layered to improve a distribution of the waveform.
